# EUROPEAN PATENT SPECIFICATION

(11) **EP 4 407 973 B1**
(45) Date of publication and mention of the grant of the patent: **03.12.2025**
(21) Application number: 24153307.4
(22) Date of filing: 23.01.2024
(51) Int. Cl.: H04N 1/00, G06F 3/12, H04N 1/44

(54) **IMAGE PROCESSING APPARATUS, METHOD FOR CONTROLLING IMAGE PROCESSING APPARATUS, AND PROGRAM**
BILDVERARBEITUNGSVORRICHTUNG, VERFAHREN ZUR STEUERUNG DER BILDVERARBEITUNGSVORRICHTUNG UND PROGRAMM
APPAREIL DE TRAITEMENT D'IMAGE, PROCÉDÉ DE COMMANDE D'APPAREIL DE TRAITEMENT D'IMAGE ET PROGRAMME

(30) Priority: 30.01.2023 JP 2023012005
(43) Date of publication of application: 31.07.2024
(73) Proprietor: Canon Kabushiki Kaisha, Ohta-ku Tokyo 146-8501 (JP)
(72) Inventor: ARAKAKI, Ryohei, Tokyo (JP)
(74) Representative: WESER & Kollegen Patentanwälte PartmbB

(56) References cited:
- US-A1- 2009 316 185
- US-A1- 2018 131 831
- US-A1- 2022 334 510

## Description

### BACKGROUND OF THE INVENTION

### Field of the Invention

The present disclosure relates to functionality limitation of an image processing apparatus.

### Description of the Related Art

There are subscription services for image processing apparatuses such as inkjet printers and copiers, providing, at a flat fee, access to an image processing apparatus itself and its consumable supplies to use them for printing. In such subscription services, information on an image processing apparatus of a user with a service contract is typically managed in a server on the subscription service provider end. Thus, having a contract for the subscription service and connecting the image processing apparatus to a network in order to transmit print history information to the server are the conditions for the user to use the service. In a case where the conditions for using the service are not satisfied, typically, the user's use of the image processing apparatus is limited. For example, Japanese Patent Laid-Open No. 2021-110775 (hereinafter referred to as Document 1) discloses a technique for limiting a printing process by an image processing apparatus in a case where the image processing apparatus cannot communicate with the server that is managing contract information.

In the technique in Document 1, in a case where the image processing apparatus transitions to a functionality limited state before processing is completed on data received in a state where the conditions for using the service are satisfied, the image processing apparatus cannot complete the processing on the data. In view of such a problem, a technique for completing the processing on data already received before transitioning to the functionality limited state in the image processing apparatus, is required.
US 2018/0131831 A1 relates to a printer which, when a subscription configuration is implemented, restrictively controls use of a printing material resource installed on the printer, and which, when a trade use configuration is implemented, provides for less or no control over the use of the printing material resource.

### SUMMARY OF THE INVENTION

The present invention in its first aspect provides an image processing apparatus as specified in claims 1 to 12.

The present invention in its second aspect provides a method for controlling an image processing apparatus as specified in a claim 13.

The present invention in its third aspect provides a program as specified in a claim 14.

Further features of the present invention will become apparent from the following description of exemplary embodiments with reference to the attached drawings.

### BRIEF DESCRIPTION OF THE DRAWINGS

Fig. 1 is a schematic diagram showing a system configuration of an information processing system;
Fig. 2 is a block diagram showing a hardware configuration of an image processing apparatus;
Fig. 3 is a block diagram showing a hardware configuration of a subscription service server;
Fig. 4 is a sequence chart showing communication processing for obtaining subscribing information of subscription service;
Fig. 5 is a flowchart of functionality limitation processing in the image processing apparatus;
Fig. 6 is a flowchart of fax reception processing in the image processing apparatus;
Fig. 7 is a flowchart of printing processing in the image processing apparatus;
Fig. 8A is a diagram showing screen transition in a display control unit in a functionality limited state;
Fig. 8B is a diagram showing the screen transition in the display control unit in the functionality limited state;
Fig. 9A is a diagram showing the screen transition in the display control unit in printing of an image in the functionality limited state;
Fig. 9B is a diagram showing the screen transition in the display control unit in printing of the image in the functionality limited state;
Fig. 9C is a diagram showing the screen transition in the display control unit in printing of the image in the functionality limited state;
Fig. 9D is a diagram showing the screen transition in the display control unit in printing of the image in the functionality limited state;
Fig. 9E is a diagram showing the screen transition in the display control unit in printing of the image in the functionality limited state;
Fig. 10 is a flowchart of image data transmission processing in the image processing apparatus;
Fig. 11A is a diagram showing the screen transition in the display control unit in execution of the image data transmission processing;
Fig. 11B is a diagram showing the screen transition in the display control unit in execution of the image data transmission processing;
Fig. 11C is a diagram showing the screen transition in the display control unit in execution of the image data transmission processing;
Fig. 11D is a diagram showing the screen transition in the display control unit in execution of the image data transmission processing;
Fig. 12 is a schematic diagram showing a system configuration of an information processing system;
Fig. 13 is a flowchart of user notification processing in the image processing apparatus;
Fig. 14A is a diagram showing the screen transition in the display control unit in the user notification processing; and
Fig. 14B is a diagram showing the screen transition in the display control unit in the user notification processing.

### DESCRIPTION OF THE EMBODIMENTS

Before describing embodiments, the following gives a supplementary description of an example where processing in which a function of an image processing apparatus has already started before the image processing apparatus transitions to a state where the conditions for using the service are not satisfied, is not completed. An example of such a case is a case where image data received by fax in the service use condition satisfied state cannot be printed immediately because of shortage of consumable supplies, resulting in a transition to a service use condition unsatisfied state. In view of a user, the image data saved in the image processing apparatus has been generated with the user being in a service use condition satisfied state, and it is therefore desired that the image data be outputted in some way. Thus, means for printing image data saved in an image processing apparatus or outputting such image data to an external apparatus even in a state where the image processing apparatus is in a service use condition unsatisfied state and therefore has limited functionally, is required.

Hereinafter, with reference to the attached drawings, the present invention is explained in detail in accordance with preferred embodiments. Configurations shown in the following embodiments are merely exemplary and the present invention is not limited to the configurations shown schematically. In addition, the same components are denoted by the same reference numerals. Further, each process (step) in the flowcharts and the sequence charts is denoted by a reference numeral starting with S.

### [First Embodiment]

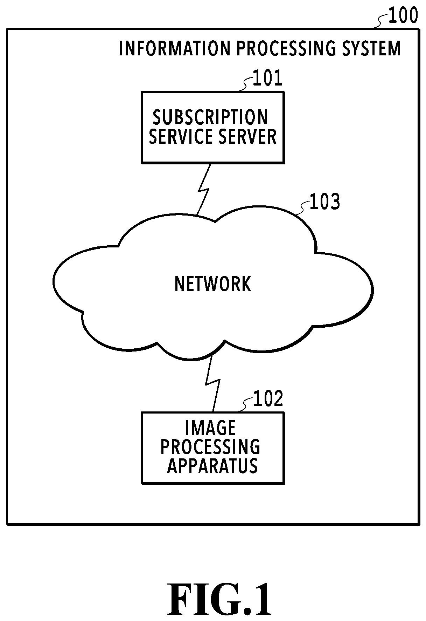

The system configuration of a first embodiment is described with reference to Fig. 1. Fig. 1 is a schematic diagram showing an overall configuration of an information processing system 100 according to the present embodiment. The information processing system 100 includes a subscription service server 101 that manages users' contracts and an image processing apparatus 102. The image processing apparatus 102 communicates with the subscription service server 101 via a network 103.

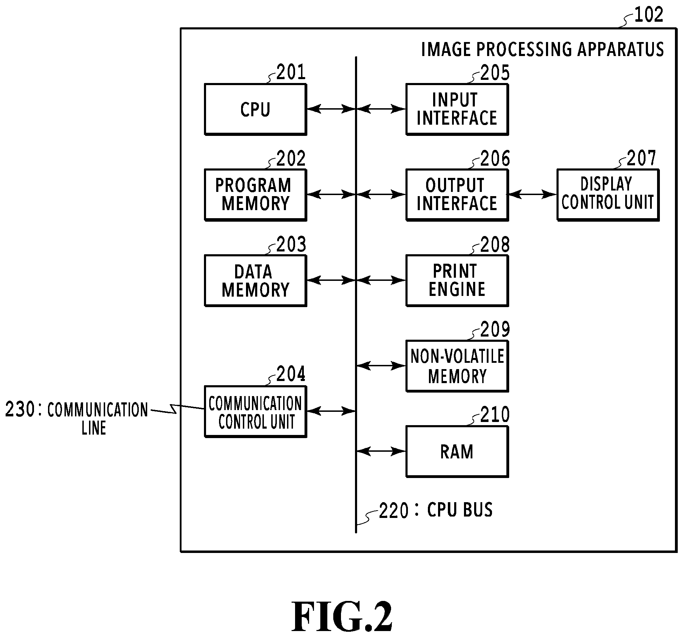

Fig. 2 is a diagram showing the hardware configuration of the image processing apparatus 102 according to the present embodiment. The image processing apparatus 102 includes a CPU 201, a program memory 202, a data memory 203, a communication control unit 204, an input interface 205, and an output interface 206. The image processing apparatus 102 also includes a display control unit 207, a print engine 208, a non-volatile memory 209, and a RAM 210.

The CPU 201 is a system control unit and performs overall control of the image processing apparatus 102. The program memory 202 stores control programs and built-in operating system programs executed by the CPU 201 and the like. The data memory 203 stores program control variables and the like and has various work buffer areas to be used in the processing performed by the print engine 208. The communication control unit 204 controls transmitting the data to an external apparatus and receiving the data from the external apparatus via a communication line 230.

The input interface 205 is an interface used to receive a data input and an operation instruction from a user and is formed by physical keyboard and buttons, a touch panel, and the like. The output interface 206 is an interface used to perform control so that the display control unit 207 displays the data or notifies the state of the image processing apparatus 102. A mode that the output interface 206 and the input interface 205 have the same configuration is possible so that screen output and reception of user operations may be performed with the same configuration.

The display control unit 207 is formed by a light-emitting diode (LED), a liquid crystal display (LCD), or the like and performs displaying of the data and notifying the state of the image processing apparatus 102. Note that a software keyboard including keys such as number input keys, a mode setting key, an enter key, a cancel key, and a power key may be placed on the display control unit 207 to receive user inputs via the display control unit 207.

The print engine 208 forms an image on a printing medium, such as paper, using a printing material, such as ink, based on information saved in the data memory 203 and a print job received. The non-volatile memory 209 is formed by a device such as an electrically erasable programmable read-only memory (EEPROM) or flash memory. The non-volatile memory 209 is used to save mainly data such as values set for the image processing apparatus 102, which need to be retained even while power is not supplied to the image processing apparatus 102. The RAM 210 is formed by a dynamic random-access memory (DRAM) that needs a backup power supply. The RAM 210 is also used as a main memory or a work memory for the CPU 201 and is used to save various kinds of information and a reception buffer for temporarily saving print information received from a PC or the like. The CPU 201, the program memory 202, the data memory 203, the communication control unit 204, the input interface 205, the output interface 206, the print engine 208, the non-volatile memory 209, and the RAM 210 are connected to one another via a CPU bus 220.

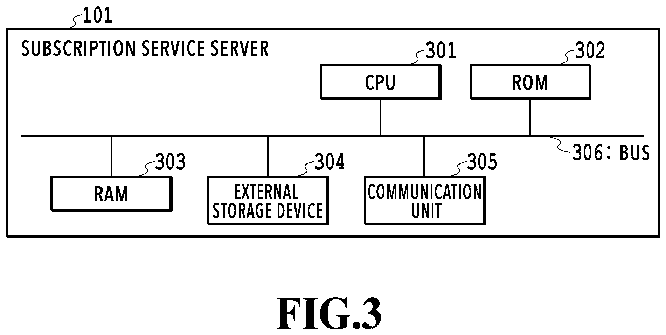

Fig. 3 is a diagram showing the hardware configuration of the subscription service server 101 according to the present embodiment. The subscription service server 101 includes a CPU 301, a ROM 302, a RAM 303, an external storage device 304, a communication unit 305, and the like. The CPU 301 performs overall control of the subscription service server 101 according to the control programs stored in the ROM 302 as well as the operating system and various set values loaded from the external storage device 304 into the RAM 303. The ROM 302 stores control programs and the like. The RAM 303 is used to save the operating system and various set values used by being loaded from the external storage device 304 to be described later into the RAM 303. The external storage device 304 stores various set values for the subscription service server 101 and the operating system to be used by being loaded into the RAM 303. The external storage device 304 further stores data to be transmitted to the image processing apparatus 102. The CPU 301 can read and write data from and into the external storage device 304. The communication unit 305 is connected to a network such as the Internet or a local area network and communicates with other apparatuses capable of communicating. The communication unit 305 is controlled by the CPU 301. The CPU 301, the ROM 302, the RAM 303, the external storage device 304, and the communication unit 305 are connected to one another via a bus 306.

Next, an overview of a subscription service provided by the information processing system 100 is described. A subscription service provides a printing environment where, generally, a user is charged a fixed amount for printing up to a certain number of sheets depending on their monthly plan. In a case where the certain number of sheets is exceeded, the plan is changed to a plan at a higher level, or the user is charged pay-per-use, i.e., charged incrementally for every additional sheet.

In a case where a user applies for a subscription service, a service provider ships the image processing apparatus 102 to the user along with consumable supplies. The image processing apparatus 102 receives subscribing information of subscription service (contract subscribing information) from the subscription service server 101 via the communication line 230. Once printing is performed, the image processing apparatus 102 creates a job log including information indicating how many sheets have been printed for the job, how much of the consumable supplies have been consumed by the job, and the like, and transmits the job log to the subscription service server 101. Based on the information in the job log, the subscription service server 101 keeps track of the number of sheets printed per month, calculates the consumption rates of the consumable supplies used by the user, and ships consumable supplies at the timing of the consumable supplies running low. Due to such a system configuration, in order to provide the subscription service, it is essential that the image processing apparatus 102 be connected to the network at all times and that an environment for transmitting a job log to the subscription service server 101 at regular or irregular time intervals be maintained. Thus, in a case where the image processing apparatus 102 is not connected to the network, the image processing apparatus 102 is inevitably limited in its functionality or made unavailable for use.

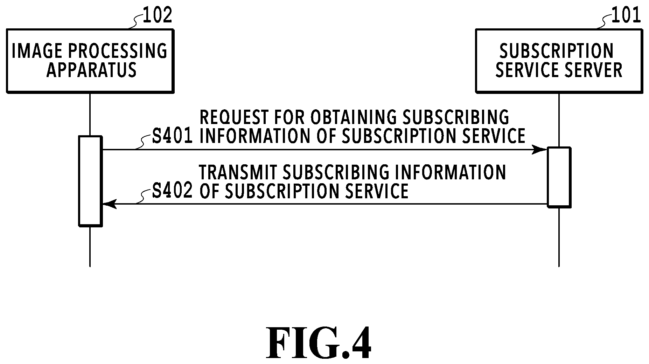

Fig. 4 is a sequence chart showing communication processing for obtaining contract information performed between the image processing apparatus 102 and the subscription service server 101 in the present embodiment. In S401, the image processing apparatus 102 issues a request to obtain the subscribing information of the subscription service from the subscription service server 101 at certain time intervals based on internal clock information (not shown). However, the present disclosure is not limited to this. The image processing apparatus 102 may transmit the request to obtain the subscribing information of the subscription service not only at certain time intervals, but also upon reception of a print job or upon reception of a fax. In a case where the processing in S401 is completed, the processing proceeds to S402. In S402, the subscription service server 101 transmits the subscribing information of the subscription service to the image processing apparatus 102. Although a mode where the image processing apparatus 102 obtains the subscribing information of the subscription service from the subscription service server 101 at certain time intervals is described in the present embodiment, it is to be noted that the method for obtaining the subscribing information of the subscription service is not limited to this. In a case where the subscribing information of the subscription service is modified on the subscription service server 101, the subscription service server 101 may notify the modification of the subscribing information of the subscription service to the image processing apparatus 102. Also, the subscription service server 101 may transmit the subscribing information of the subscription service to the image processing apparatus 102 as a response to a job log transmitted from the image processing apparatus 102 to the subscription service server 101.

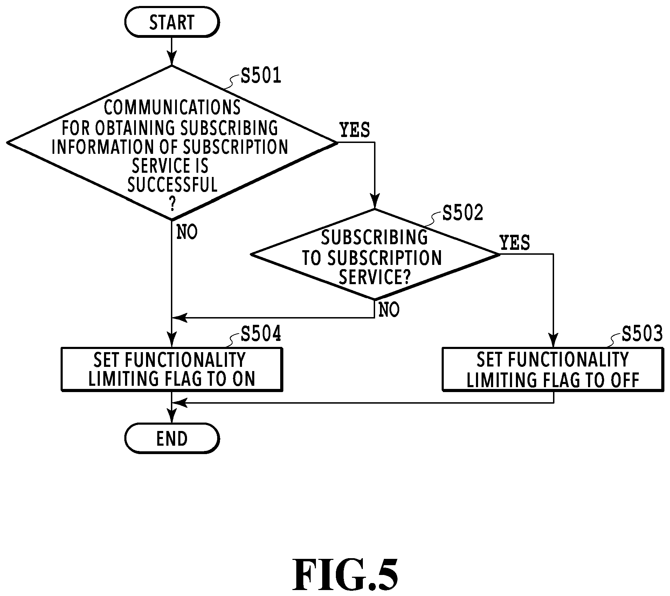

Next, how functionality limitation processing is performed in the present embodiment is described with reference to Fig. 5. Fig. 5 is a flowchart of functionality limitation processing in the image processing apparatus 102. This processing is executed in the image processing apparatus 102 immediately after the image processing apparatus 102 performs the communication processing for obtaining the subscribing information of the subscription service shown in Fig. 4 with the subscription service server 101.

In S501, the CPU 201 of the image processing apparatus 102 determines whether the communication for obtaining the subscribing information of the subscription service has been successful. In a case where the communication for obtaining the subscribing information of the subscription service has been successful, the processing proceeds to S502. In a case where the communication for obtaining the subscribing information of the subscription service has been unsuccessful (in a case where the subscribing information of the subscription service has not been received), the processing proceeds to S504. In S502, by referring to the subscribing information of the subscription service obtained by the communication processing for obtaining the subscribing information of the subscription service, the CPU 201 of the image processing apparatus 102 determines whether the image processing apparatus 102 is subscribing to the subscription service. In a case where the CPU 201 of the image processing apparatus 102 confirms that the image processing apparatus 102 is subscribing to the subscription service, the processing proceeds to S503. In a case where the CPU 201 of the image processing apparatus 102 does not confirm that the image processing apparatus 102 is subscribing to the subscription service, the processing proceeds to S504.

In S503, the CPU 201 of the image processing apparatus 102 sets a functionality limitation flag stored in the non-volatile memory 209 to off, and the functionality limitation processing shown in Fig. 5 ends. In S504, the CPU 201 of the image processing apparatus 102 sets the functionality limitation flag stored in the non-volatile memory 209 to on, and the functionality limitation processing shown in Fig. 5 ends.

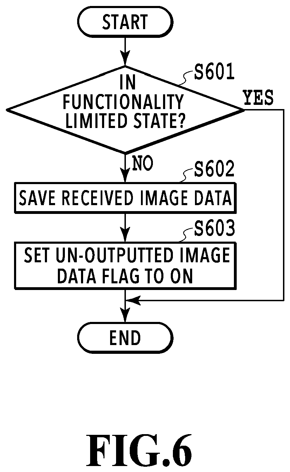

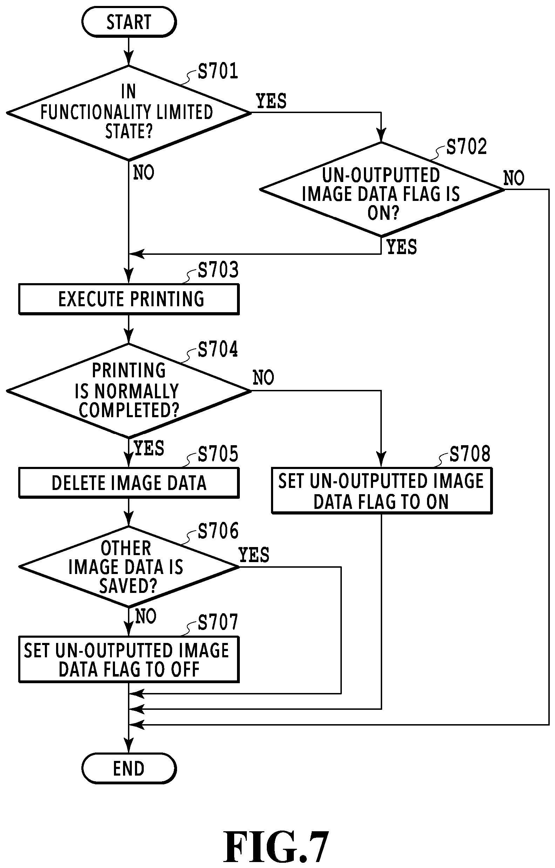

Next, functionality limitation is described using fax reception processing as typical processing performed by the image processing apparatus 102. In the fax reception processing, two processes are performed: "fax data reception processing" and "printing processing." First, how the fax data reception processing is performed in the present embodiment is described with reference to Fig. 6, and the "printing processing" is described with reference to Fig. 7. Fig. 6 shows a flowchart of the fax data reception processing in the image processing apparatus 102. This processing is performed in the image processing apparatus 102 that has received image data via a communication line through a fax transmission function of a different image processing apparatus.

In S601, the CPU 201 of the image processing apparatus 102 determines whether the image processing apparatus 102 is in a functionality limited state. Specifically, the CPU 201 of the image processing apparatus 102 refers to the functionality limitation flag stored in the non-volatile memory 209 and determines that the image processing apparatus 102 is in a functionality limited state in a case where the functionality limitation flag is on and determines that the image processing apparatus 102 is not in a functionality limited state in a case where the functionality limitation flag is off. In a case where the image processing apparatus 102 is in a functionality limited state, the fax reception processing shown in Fig. 6 ends. In a case where the image processing apparatus 102 is not in a functionality limited state, the processing proceeds to S602.

In S602, the CPU 201 of the image processing apparatus 102 saves the received image data in the RAM 210, and the processing proceeds to S603. In S603, the CPU 201 of the image processing apparatus 102 sets an un-outputted image data flag stored in the RAM 210 to on, and the fax data reception processing shown in Fig. 6 ends.

Details of the printing processing will be described with reference to Fig. 7. The processing shown in Fig. 5 may be performed between completion of the processing in S601 of the "fax data reception processing" and the beginning of the "printing processing." For example, there is a mode where, in the event of fax data reception, the received data is stored in the RAM 210 of the image processing apparatus 102. Then, in a case where a user wants to print the received fax data, the user issues a print instruction by operating the image processing apparatus 102 or the like to print the fax data. Using such a function helps eliminate unnecessary printing of fax data. In this way, there may be a time difference between receiving fax data and performing processing thereon. This is why the processing shown in Fig. 5 may be performed between completion of the processing in S601 of the "fax data reception processing" and the beginning of the "printing processing." In this case, there may be a case where the "functionality limitation flag" is off in the "fax data reception processing" and the "functionality limitation flag" is on in the event where the "printing processing" is performed. There may also be a case where the functionality limitation flag is off at the beginning of the "printing processing," but the "printing processing" is re-executed because printing is not properly finished due to, e.g., shortage of consumable supplies. There may be a case where the processing shown in Fig. 5 is performed before the re-execution of the "printing processing," changing the "functionality limitation flag" from off to on, so that the "functionality limitation flag" is on in the re-execution of the "printing processing." In this way, the value of the "functionality limitation flag" in the "fax data reception processing" and the value of the "functionality limitation flag" in the "printing processing" may differ.

Next, how the printing processing is performed in the present embodiment is described with reference to Fig. 7. Fig. 7 shows a flowchart of the printing processing in the image processing apparatus 102. The printing processing is executed in the image processing apparatus 102 based on the following triggers. The triggers include completion of the fax data reception processing, reception of a print job, completion of scan processing in a copy job, resumption from an error, or a user operation of the input interface 205.

In S701, the CPU 201 of the image processing apparatus 102 determines whether the image processing apparatus 102 is in a functionality limited state. In a case where the image processing apparatus 102 is in a functionality limited state, the processing proceeds to S702. In a case where the image processing apparatus 102 is not in a functionality limited state, the processing proceeds to S703.

In S702, the CPU 201 of the image processing apparatus 102 determines whether the image processing apparatus 102 has the image data saved in the fax data reception processing due to the above-described functionality limitation. Specifically, the image processing apparatus 102 refers to the un-outputted image data flag in the RAM 210 of the image processing apparatus 102 and in a case where the un-outputted image data flag is on, determines that there is image data saved. In a case where the un-outputted image data flag is off, the image processing apparatus 102 determines that there is no image data saved. In a case where the CPU 201 of the image processing apparatus 102 determines that there is received image data, the processing proceeds to S703. Also, triggers for performing processing using the image data (the processing in S703) include resumption from an error and a user operation of the input interface 205. In a case where the CPU 201 of the image processing apparatus 102 determines that there is no received image data, the printing processing shown in Fig. 7 ends.

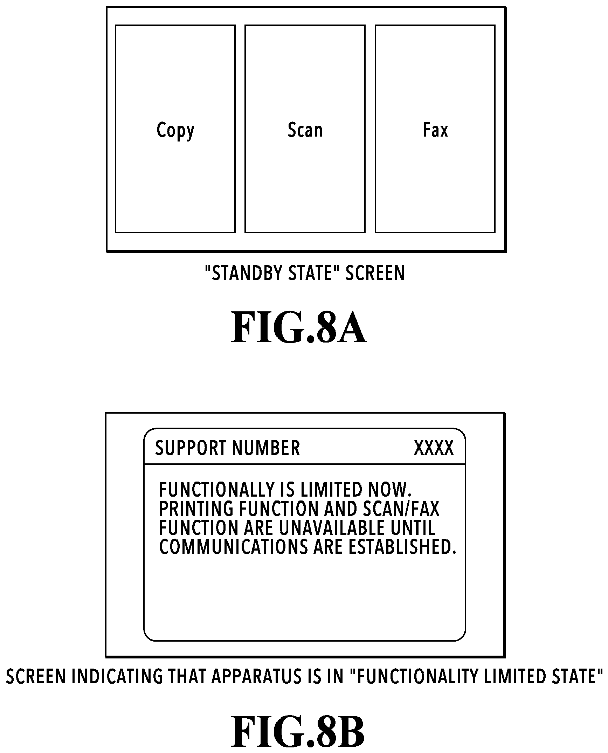

Next, a description is given of how the screen displayed by the display control unit 207 transitions in a case where the un-outputted image data flag is on or off in S702. In S702, the functionality limitation flag is on because it is determined in S701 that the image processing apparatus 102 is in a "functionality limited state." In a case where a user presses a button "Copy," "Scan," or "Fax" on the menu screen in the "standby state" shown in Fig. 8A with the un-outputted image data flag being off, the display screen transitions to a screen indicating the "functionality limited state" shown in Fig. 8B. Seeing the error notification screen shown in Fig. 8B, the user becomes aware that the image processing apparatus 102 is in a "functionality limited state."

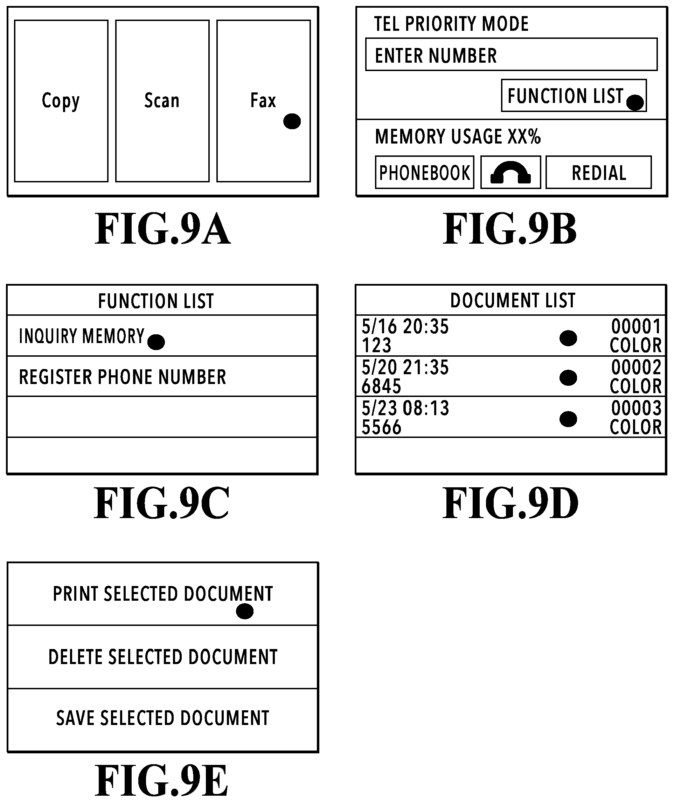

Next, with reference to Figs. 9A to 9E, a description is given of user operations performed on the screen displayed on the display control unit 207 in a case where the un-outputted image data flag is on and the user outputs un-outputted image data using the fax reception processing. A user can output the un-outputted image data by pressing the buttons as denoted with "•" sequentially in Figs. 9A -> 9B -> 9C -> 9D -> 9E. In a case where there are a plurality of sets of the un-outputted image data in Fig. 9D, a plurality of buttons denoted with "•" are displayed. Also, in Figs. 9A to 9E, in a case where the user presses a button other than the ones denoted by "•", the display screen transitions to the display screen shown in Fig. 8B, and the user becomes aware that the image processing apparatus 102 is in a "functionality limited state." The following describes the details of the screen transitions specifically.

For instance, a user presses a button for the item "Fax" on the "standby state" screen shown in Fig. 9A. In a case where the un-outputted image data flag is on, the screen transitions to the one shown in Fig. 9B. In a case where the user presses a "Function List" button displayed in Fig. 9B, the screen transitions to the "Function List" screen shown in Fig. 9C. In a case where the user selects "Inquiry Memory" on the "Function List" screen, the screen transitions to the "Document List" screen shown in Fig. 9D. On the "Document List" screen, the un-outputted image data are displayed. For instance, in a case where the user selects image data "No. 00001" on the "Document List" screen, the screen transitions to the one shown in Fig. 9E. In a case where the user selects "Print Selected Document" on the screen shown in Fig. 9E, the image processing apparatus 102 executes the printing processing on the image data "No. 00001."

In S703, the image processing apparatus 102 executes the printing, and the processing proceeds to S704. In S704, the CPU 201 of the image processing apparatus 102 determines whether the image processing apparatus 102 has normally completed the printing. In a case where the CPU 201 of the image processing apparatus 102 determines that the image processing apparatus 102 completed the printing normally, the processing proceeds to S705. In a case where the CPU 201 of the image processing apparatus 102 determines that the image processing apparatus 102 did not complete the printing normally, the processing proceeds to S708 without deleting the image data.

In S705, the CPU 201 of the image processing apparatus 102 deletes the printed image data saved in the RAM 210, and the processing proceeds to S706. In S706, the CPU 201 of the image processing apparatus 102 determines whether there is any other image data saved in the RAM 210. In a case where the CPU 201 of the image processing apparatus 102 determines that there is no other image data saved in the RAM 210, the processing proceeds to S707. In a case where the CPU 201 of the image processing apparatus 102 determines that there is any other image data saved in the RAM 210, the printing processing shown in Fig. 7 ends. In S707, the CPU 201 of the image processing apparatus 102 sets the un-outputted image data flag stored in the RAM 210 to off, and the printing processing shown in Fig. 7 ends. In S708, the CPU 201 of the image processing apparatus 102 sets the un-outputted image data flag stored in the RAM 210 to on, and the printing processing shown in Fig. 7 ends. Note that because the processing in S708 is performed in a case where the un-outputted image data flag is on, the processing may be ended without setting the flag to on again.

Although the fax reception is used as an example of how the image data is inputted to the image processing apparatus 102 in the present embodiment, it is to be noted that the image data is not limited to this. The image data inputted may be image data scanned by the image processing apparatus 102, image data stored in an external hard disk drive, an SSD, USB memory, or an SD card, image data obtained from a cloud storage via a network, or the like. Also, although the RAM 210 is the location where the image data and the un-outputted image data flag are saved in the present embodiment, the save location is not limited to this. In a case where the image data and the un-outputted image data flag are to be retained even after power supply to the image processing apparatus 102 is shut off, they may be saved in the non-volatile memory 209 or an external storage device connected to the image processing apparatus 102. Also, in the present embodiment, in a subscription service unsubscribing state, the image processing apparatus 102 can print the image data obtained in a subscription service subscribing state and transmits a job log to the subscription service server 101. However, it is optional whether to charge for the image data obtained in a subscription service subscribing state and printed in a subscription service unsubscribing state. Also, it is conceivable to allow the image data to be printed offline up to a predetermined number of sheets, depending on the type of a subscription service. In such a case, the following configuration may be employed. Specifically, up to the predetermined number of sheets, regular printing is performed, i.e., data is printed upon receipt of the data irrespective of the functionality limitation flag and the un-outputted image data flag, and beyond the predetermined number of sheets, the processing in Figs. 6 and 7 is performed.

As described above, the present embodiment can complete the processing which has been started before the image processing apparatus transitions to a functionality limited state. For example, even in a case where the image processing apparatus 102 is in a functionality limited state because of no longer satisfying the conditions for using the service, a user can process the image data obtained in a subscription service subscribing state.

### [Second Embodiment]

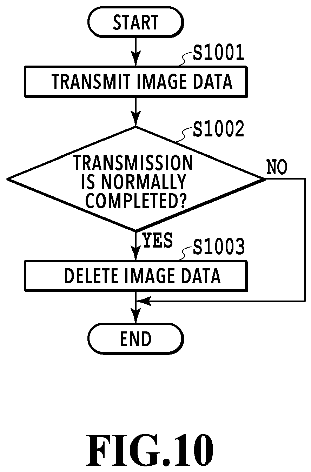

The first embodiment described above only describes an example where the printing unit is used as means for outputting image data saved in the image processing apparatus 102. The present embodiment assumes a case where it is difficult for the image processing apparatus 102 to resume from an error to a printable state due to printing-related trouble occurring in the image processing apparatus 102 and describes an example case of transmitting the image data to a different image processing apparatus with reference to Fig. 10. Fig. 10 is a flowchart showing image data transmission processing in the image processing apparatus 102. This processing is executed in response to a user operation of the input interface 205 of the image processing apparatus 102.

In S1001, the CPU 201 of the image processing apparatus 102 transmits image data saved in the RAM 210 to a different image processing apparatus, and the processing proceeds to S1002. The image data transmitted here is the data saved in S602 in Fig. 6, or in other words, the data received while the image processing apparatus 102 is not in a functionality limited state. In S1002, the CPU 201 of the image processing apparatus 102 determines whether the image data transmission processing has been completed normally. In a case where the CPU 201 of the image processing apparatus 102 determines that the image data transmission processing has been completed normally, the processing proceeds to S1003. In a case where the CPU 201 of the image processing apparatus 102 determines that the image data transmission processing has not been completed normally, the image data transmission processing shown in Fig. 10 ends. In S1003, the CPU of the image processing apparatus 102 deletes the transmitted image data saved in the RAM 210, and the image data transmission processing shown in Fig. 10 ends.

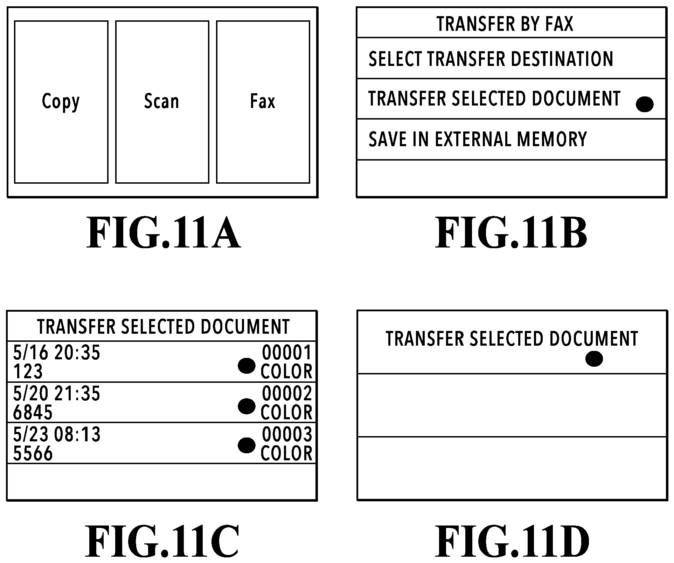

Figs. 11A to 11D show how the screen on the display control unit 207 transitions in response to user operations in the image data transmission processing in S1001. The following description assumes that a transfer destination of the image data has already been selected. By operating the input interface 205, the user turns off the software on the image processing apparatus 102 on the "standby state" screen shown in Fig. 11A, and activates the image processing apparatus 102 as a transfer mode. In a case where the image processing apparatus 102 is activated as a transfer mode, the "Transfer by Fax" screen shown in Fig. 11B is displayed on the screen on the display control unit 207. In a case where the user selects "Transfer Selected Document" on the "Transfer by Fax" screen, the screen transitions to the "Transfer Selected Document" screen shown in Fig. 11C. In a case where the user selects image data "No. 00001" on the "Transfer Selected Document" screen, the screen transitions to the screen shown in Fig. 11D. In a case where the user selects "Transfer Selected Document" on the screen shown in Fig. 11D, the image processing apparatus 102 executes the processing for transferring the image data "No. 00001."

In the present embodiment, the image data transmission processing is executed irrespective of the functionality limitation flag and the un-outputted image data flag in the image processing apparatus 102. Thus, the image data received not in a functionality limited state and saved in the image processing apparatus 102 can be transferred even in a functionality limited state. Note that like in the first embodiment, whether to execute the image data transmission processing may be determined using the functionality limitation flag and the un-outputted image data flag as conditions. Also, the destination to transmit the image data is not limited to a different image processing apparatus. The destination to transmit the image data may be a different information processing apparatus. The different information processing apparatus only needs to have a communication function and a display function and include a storage device. Also, an apparatus to which to output the image data saved in the image processing apparatus 102 may be an external storage apparatus connected to the image processing apparatus 102. The external storage apparatus may be a hard disk drive, an SSD, USB memory, an SD card, a cloud storage, or the like.

As described above, even in a state where printing unit in the image processing apparatus 102 is unusable, a user can obtain the image data saved in the image processing apparatus 102.

### [Third Embodiment]

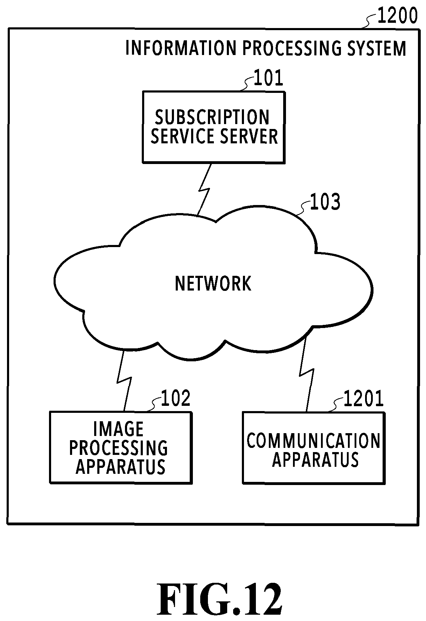

The second embodiment above describes an example where the image data is outputted to an external apparatus in response to a user operating the input interface 205 of the image processing apparatus 102. The present embodiment assumes a case where the image processing apparatus 102 does not have the input interface 205 or a case where the input interface 205 is unusable due to a failure or the like. As an example, a case of remotely operating the image processing apparatus 102 from a communication apparatus 1201 via a network is described with reference to Fig. 12.

Fig. 12 is a schematic diagram showing an overall configuration of an information processing system 1200 of the present embodiment. The communication apparatus 1201 may be any terminal apparatus having a communication function and a display function. The communication apparatus 1201 can execute the printing processing shown in Fig. 7 and the image data transmission processing shown in Fig. 10 by communicating with the image processing apparatus 102 via the network 103 and remotely operating the image processing apparatus 102. Although the image processing apparatus 102 and the communication apparatus 1201 communicate with each other via the network 103 in the present embodiment, it is to be noted that the communications may be performed via a USB bus.

As described above, even in a state where the input interface 205 of the image processing apparatus 102 is unusable, a user can obtain the image data saved in the image processing apparatus 102.

### [Fourth Embodiment]

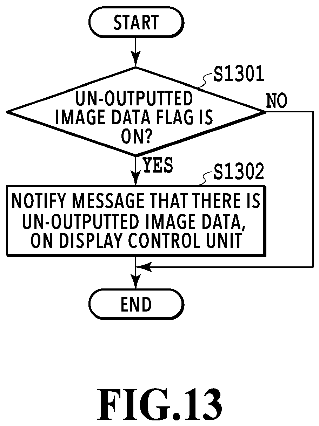

In the first to third embodiments, in order for a user to obtain the un-outputted image data, a user needs to know in advance that the un-outputted image data obtained in a subscription service subscribing state is being saved in the image processing apparatus 102. With reference to Fig. 13, the present embodiment describes an example where a user is notified that the image processing apparatus 102 still has the un-outputted image data, in a case where the image processing apparatus 102 transitions to a functionality limited state because of no longer satisfying conditions for using the service.

Fig. 13 is a flowchart of the user notification processing in the present embodiment. This processing is executed at regular or irregular time intervals after the image processing apparatus 102 transitions to a functionality limited state. Specifically, in the background, the image processing apparatus 102 performs contract information obtainment communications with the subscription service server 101. The following processing is executed at regular or irregular time intervals after it is determined that the image processing apparatus 102 is not subscribing to the subscription service and the image processing apparatus 102 transitions to a functionality limited state, in this contract information obtainment communications.

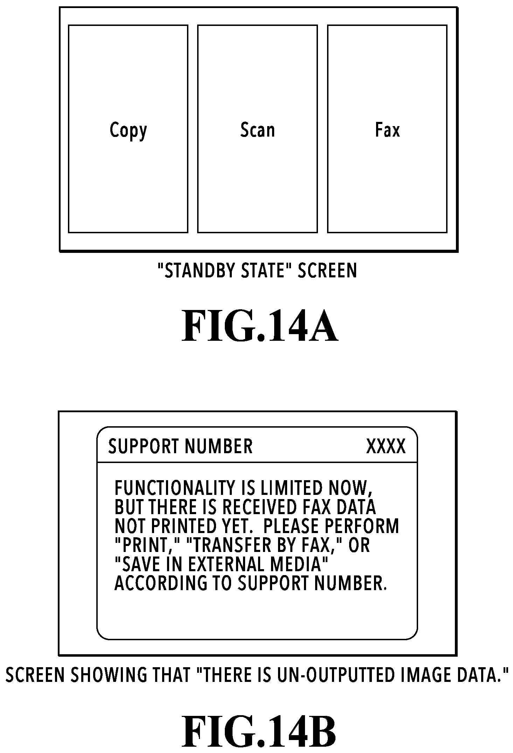

In S1301, the CPU 201 of the image processing apparatus 102 determines whether the image processing apparatus 102 has the un-outputted image data. Specifically, the CPU 201 of the image processing apparatus 102 refers to the un-outputted image data flag stored in the RAM 210 and determines whether there is the un-outputted image data. In a case where the un-outputted image data flag is on, the CPU 201 of the image processing apparatus 102 determines that there is the un-outputted image data, and the processing proceeds to S1302. In a case where the un-outputted image data flag is off, the CPU 201 of the image processing apparatus 102 determines that there is no un-outputted image data, and the user notification processing shown in Fig. 13 ends. In S1302, the CPU 201 of the image processing apparatus 102 displays an indication, on the display control unit 207 of the image processing apparatus 102, that there is the un-outputted image data. Specifically, the display control unit 207 transitions its screen from the "Standby State" screen shown in Fig. 14A to the screen shown in Fig. 14B. After the screen shown in Fig. 14B is displayed on the display control unit 207 for a predetermined time, the user notification processing shown in Fig. 13 ends. In a case of execution at regular time intervals, the display screen in Fig. 14B may be displayed for a predetermined time upon expiration of a predetermined timer started by the CPU 201 of the image processing apparatus 102. In a case of execution at irregular time intervals, the display screen in Fig. 14B may be displayed for a predetermined period of time upon completion of the processing on one of a plurality of sets of the un-outputted image data for the user.

Even in a case where the image processing apparatus 102 transitions to a functionality limited state because of no longer satisfying the conditions for using the service, the image processing apparatus 102 can notify a user that there is the un-outputted image data obtained in a subscription service subscribing state.

### [Other Embodiments]

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

## Claims

1. An image processing apparatus (102) capable of communication with a subscription service server (101) that manages a service contract of a subscription service for consumable supplies used by the image processing apparatus (102) for printing image data, the image processing apparatus (102) comprising:
a transition unit (201) configured to cause the image processing apparatus (102) to transition to a limited state where functionality is limited, in a case where it cannot be confirmed that the image processing apparatus (102) subscribes to the subscription service by the communication (S501, S502, S504);
a storage unit (203, 210) configured to store (S602) image data to be outputted by the image processing apparatus in a case where the image processing apparatus (102) is in a non-limited state in which the functionality is not limited (S601:NO) in the storage unit, **characterized in that** the image processing apparatus comprises:
a determination unit (201) configured to determine (S702), in a case where the image processing apparatus (102) is in the limited state (S701:YES), whether the storage unit (203, 210) stores un-outputted image data for which output processing by the image processing apparatus is not completed; and
a control unit (201) configured to cause the image processing apparatus (102) to transmit (S1001) the un-outputted image data stored in the storage unit (203, 210) to a destination device in a case where the image processing apparatus (102) is in the limited state (S701:YES) and the determination unit (201) has determined (S702:YES) that the storage unit (203, 210) stores un-outputted image data.

2. The image processing apparatus according to claim 1, wherein
upon resumption from an error, the control unit (201) causes the image processing apparatus (102) to execute the output processing using the image data stored in the storage unit (203, 210) in the case where the image processing apparatus (102) is in the limited state (S701:YES) and the determination unit (201) has determined (S702:YES) that the storage unit (203, 210) stores un-outputted image data.

3. The image processing apparatus according to claim 1, wherein
upon remote operation from a different communication apparatus (1201), the control unit (201) causes the image processing apparatus (102) to execute the output processing using the image data stored in the storage unit (203, 210) in the case where the image processing apparatus (102) is in the limited state (S701:YES) and the determination unit (201) has determined (S702:YES) that the storage unit (203, 210) stores un-outputted image data.

4. The image processing apparatus according to claim 1, further comprising an input interface (205), wherein
upon user operation performed on the input interface (205), the control unit (201) causes the image processing apparatus (102) to execute the output processing using the image data stored in the storage unit (203, 210) in the case where the image processing apparatus (102) is in the limited state (S701:YES) and the determination unit (201) has determined (S702:YES) that the storage unit (203, 210) stores un-outputted image data.

5. The image processing apparatus according to any one of claims 1 to 4, wherein
the case where it cannot be confirmed that the image processing apparatus (102) subscribes to the subscription service includes a case where information on the service contract is not received.

6. The image processing apparatus according to any one of claims 1 to 5, wherein
the image data to be outputted are image data received through fax reception by the image processing apparatus (102), image data scanned by the image processing apparatus (102), image data obtained from an external memory unit connected to the image processing apparatus (102) or image data obtained from a cloud storage via a communication unit (230, 204) of the image processing apparatus (102).

7. The image processing apparatus according to any one of claims 1 to 6, wherein
the output processing using the stored image data is to print the image data.

8. The image processing apparatus according to any one of claims 1 to 6, wherein
the transmission processing using the stored image data is to transmit (S1001) the image data to a different image processing apparatus or an external storage device.

9. The image processing apparatus according to any one of claims 1 to 8, wherein
in the case where the image processing apparatus (102) is in the limited state and the determination unit (201) has determined (S1301:YES) that the storage unit stores un-outputted image data, the control unit (201) performs a predetermined notification (S1302).

10. The image processing apparatus according to claim 9, further comprising a display control unit (206, 207) configured to display a menu screen for executing a function, wherein
the display control unit (206, 207) displays an error notification in a case where a predetermined item is selected on the menu screen and the image processing apparatus (102) is in the limited state, and
in the case where the image processing apparatus (102) is in the limited state and the determination unit (201) has determined that the storage unit (203, 210) stores un-outputted image data, the display control unit (206, 207) displays the predetermined notification for an item related to the image data.

11. The image processing apparatus according to claim 10, wherein
the control unit (201) is configured not to limit the output processing for the item for which the predetermined notification is displayed.

12. The image processing apparatus according to claim 10 or 11, wherein
in the case where the image processing apparatus (102) is in the limited state and the determination unit has determined that the storage unit (203, 210) stores un-outputted image data the display control unit (206, 207) displays a screen indicating that the image data is stored in the storage unit (203, 210) for a predetermined time at regular or irregular time intervals.

13. A method for controlling an image processing apparatus (102) capable of communication with a subscription service server (101) that manages a service contract of a subscription service for consumable supplies used by the image processing apparatus (102) for printing image data, the method comprising:
a transitioning step of causing the image processing apparatus (102) to transition to a limited state where functionality is limited, in a case where it cannot be confirmed that the image processing apparatus subscribes to the subscription service by the communication (S501, S502, S504);
storing (S602), in a storage unit (203, 210) of the image processing apparatus (102), image data to be outputted by the image processing apparatus in a case where the image processing apparatus (102) is in a non-limited state in which the functionality is not limited (S601:NO);
**characterized in that** the method comprises the steps of:
determining (S702), in a case where the image processing apparatus (102) is in the limited state (S701:YES), whether the storage unit (203, 210) stores un-outputted image data for which output processing by the image processing apparatus is not completed; and
executing (S1001) transmission processing to transmit the un-outputted image data stored in the storage unit (203, 210) to a destination device in a case where the image processing apparatus (102) is in the limited state (S701:YES) and the determining has determined (S702:YES) that the storage unit (203, 210) stores un-outputted image data.

14. A program with instructions which, when executed by a computer of an image processing apparatus according to any one of claims 1 to 12, causes the computer to execute the method according to claim 13.

## Patentansprüche

1. Bildverarbeitungsvorrichtung (102), die in der Lage ist, mit einem Abonnementdienstserver (101) zu kommunizieren, der einen Dienstvertrag eines Abonnementdienstes für Verbrauchsmaterialien verwaltet, die von der Bildverarbeitungsvorrichtung (102) zum Drucken von Bilddaten verwendet werden, wobei die Bildverarbeitungsvorrichtung (102) umfasst:
eine Übergangseinheit (201), die konfiguriert ist, die Bildverarbeitungsvorrichtung (102) zu veranlassen, in einen eingeschränkten Zustand überzugehen, in dem die Funktionalität eingeschränkt ist, in einem Fall, in dem durch die Kommunikation nicht bestätigt werden kann, dass die Bildverarbeitungsvorrichtung (102) den Abonnementdienst abonniert (S501, S502, S504);
eine Speichereinheit (203, 210), die konfiguriert ist, Bilddaten, die von der Bildverarbeitungsvorrichtung ausgegeben werden sollen, in einem Fall, in dem sich die Bildverarbeitungsvorrichtung (102) in einem nicht eingeschränkten Zustand befindet, in dem die Funktionalität nicht eingeschränkt ist (S601:NEIN), in der Speichereinheit zu speichern (S602), **dadurch gekennzeichnet, dass** die Bildverarbeitungsvorrichtung folgendes umfasst:
eine Bestimmungseinheit (201), die konfiguriert ist, in einem Fall, in dem sich die Bildverarbeitungsvorrichtung (102) im eingeschränkten Zustand befindet (S701:JA), zu bestimmen (S702), ob die Speichereinheit (203, 210) nicht ausgegebene Bilddaten speichert, für die die Ausgabeverarbeitung durch die Bildverarbeitungsvorrichtung nicht abgeschlossen ist; und
eine Steuereinheit (201), die konfiguriert ist, die Bildverarbeitungsvorrichtung (102) zu veranlassen, die nicht ausgegebenen Bilddaten, die in der Speichereinheit (203, 210) gespeichert sind, an eine Zieleinrichtung zu übertragen (S1001), in einem Fall, in dem sich die Bildverarbeitungsvorrichtung (102) im eingeschränkten Zustand befindet (S701:JA) und die Bestimmungseinheit (201) bestimmt hat (S702:JA), dass die Speichereinheit (203, 210) nicht ausgegebene Bilddaten speichert.

2. Bildverarbeitungsvorrichtung nach Anspruch 1, wobei
bei Wiederaufnahme nach einem Fehler die Steuereinheit (201) die Bildverarbeitungsvorrichtung (102) veranlasst, die Ausgabeverarbeitung unter Verwendung der Bilddaten, die in der Speichereinheit (203, 210) gespeichert sind, in dem Fall auszuführen, in dem sich die Bildverarbeitungsvorrichtung (102) im eingeschränkten Zustand befindet (S701:JA) und die Bestimmungseinheit (201) bestimmt hat (S702:JA), dass die Speichereinheit (203, 210) nicht ausgegebene Bilddaten speichert.

3. Bildverarbeitungsvorrichtung nach Anspruch 1, wobei
bei Fernbetrieb von einer anderen Kommunikationsvorrichtung (1201) die Steuereinheit (201) die Bildverarbeitungsvorrichtung (102) veranlasst, die Ausgabeverarbeitung unter Verwendung der Bilddaten, die in der Speichereinheit (203, 210) gespeichert sind, in dem Fall auszuführen, in dem sich die Bildverarbeitungsvorrichtung (102) im eingeschränkten Zustand befindet (S701:JA) und die Bestimmungseinheit (201) bestimmt hat (S702:JA), dass die Speichereinheit (203, 210) nicht ausgegebene Bilddaten speichert.

4. Bildverarbeitungsvorrichtung nach Anspruch 1, ferner umfassend eine Eingabeschnittstelle (205), wobei
bei einer Benutzerbedienung, der auf der Eingabeschnittstelle (205) durchgeführt wird, die Steuereinheit (201) die Bildverarbeitungsvorrichtung (102) veranlasst, die Ausgabeverarbeitung unter Verwendung der Bilddaten, die in der Speichereinheit (203, 210) gespeichert sind, in dem Fall auszuführen, in dem sich die Bildverarbeitungsvorrichtung (102) im eingeschränkten Zustand befindet (S701:JA) und die Bestimmungseinheit (201) bestimmt hat (S702:JA), dass die Speichereinheit (203, 210) nicht ausgegebene Bilddaten speichert.

5. Bildverarbeitungsvorrichtung nach einem der Ansprüche 1 bis 4, wobei
der Fall, in dem nicht bestätigt werden kann, dass die Bildverarbeitungsvorrichtung (102) den Abonnementdienst abonniert, einen Fall einschließt, in dem Informationen über den Dienstvertrag nicht empfangen werden.

6. Bildverarbeitungsvorrichtung nach einem der Ansprüche 1 bis 5, wobei
die auszugebenden Bilddaten Bilddaten, die durch Faxempfang durch die Bildverarbeitungsvorrichtung (102) empfangen werden, Bilddaten, die von der Bildverarbeitungsvorrichtung (102) gescannt werden, Bilddaten, die von einer externen Speichereinheit erhalten werden, die mit der Bildverarbeitungsvorrichtung (102) verbunden ist, oder Bilddaten sind, die von einem Cloud-Speicher über eine Kommunikationseinheit (230, 204) der Bildverarbeitungsvorrichtung (102) erhalten werden.

7. Bildverarbeitungsvorrichtung nach einem der Ansprüche 1 bis 6, wobei
die Ausgabeverarbeitung unter Verwendung der gespeicherten Bilddaten darin besteht, die Bilddaten zu drucken.

8. Bildverarbeitungsvorrichtung nach einem der Ansprüche 1 bis 6, wobei
die Übertragungsverarbeitung unter Verwendung der gespeicherten Bilddaten darin besteht, die Bilddaten an eine andere Bildverarbeitungsvorrichtung oder eine externe Speichereinrichtung zu übertragen (S1001).

9. Bildverarbeitungsvorrichtung nach einem der Ansprüche 1 bis 8, wobei
in dem Fall, in dem sich die Bildverarbeitungsvorrichtung (102) im eingeschränkten Zustand befindet und die Bestimmungseinheit (201) bestimmt hat (S1301:JA), dass die Speichereinheit nicht ausgegebene Bilddaten speichert, die Steuereinheit (201) eine vorbestimmte Benachrichtigung durchführt (S1302).

10. Bildverarbeitungsvorrichtung nach Anspruch 9, ferner umfassend eine Anzeigesteuereinheit (206, 207), die konfiguriert ist, einen Menübildschirm zum Ausführen einer Funktion anzuzeigen, wobei
die Anzeigesteuereinheit (206, 207) eine Fehlerbenachrichtigung in einem Fall anzeigt, in dem ein vorbestimmtes Element auf dem Menübildschirm ausgewählt wird und sich die Bildverarbeitungsvorrichtung (102) im eingeschränkten Zustand befindet, und
in dem Fall, in dem sich die Bildverarbeitungsvorrichtung (102) im eingeschränkten Zustand befindet und die Bestimmungseinheit (201) bestimmt hat, dass die Speichereinheit (203, 210) nicht ausgegebene Bilddaten speichert, die Anzeigesteuereinheit (206, 207) die vorbestimmte Benachrichtigung für ein Element anzeigt, das sich auf die Bilddaten bezieht.

11. Bildverarbeitungsvorrichtung nach Anspruch 10, wobei
die Steuereinheit (201) konfiguriert ist, die Ausgabeverarbeitung für das Element, für das die vorbestimmte Benachrichtigung angezeigt wird, nicht einzuschränken.

12. Bildverarbeitungsvorrichtung nach Anspruch 10 oder 11, wobei
in dem Fall, in dem sich die Bildverarbeitungsvorrichtung (102) im eingeschränkten Zustand befindet und die Bestimmungseinheit bestimmt hat, dass die Speichereinheit (203, 210) nicht ausgegebene Bilddaten speichert, die Anzeigesteuereinheit (206, 207) für eine vorbestimmte Zeit in regelmäßigen oder unregelmäßigen Zeitintervallen einen Bildschirm anzeigt, der angibt, dass die Bilddaten in der Speichereinheit (203, 210) gespeichert sind.

13. Verfahren zum Steuern einer Bildverarbeitungsvorrichtung (102), die in der Lage ist, mit einem Abonnementdienstserver (101) zu kommunizieren, der einen Dienstvertrag eines Abonnementdienstes für Verbrauchsmaterialien verwaltet, die von der Bildverarbeitungsvorrichtung (102) zum Drucken von Bilddaten verwendet werden, wobei das Verfahren umfasst:
einen Übergangsschritt des Veranlassens der Bildverarbeitungsvorrichtung (102), in einen eingeschränkten Zustand überzugehen, in dem die Funktionalität eingeschränkt ist, in einem Fall, in dem durch die Kommunikation nicht bestätigt werden kann, dass die Bildverarbeitungsvorrichtung den Abonnementdienst abonniert (S501, S502, S504);
Speichern (S602), in einer Speichereinheit (203, 210) der Bildverarbeitungsvorrichtung (102), von Bilddaten, die von der Bildverarbeitungsvorrichtung ausgegeben werden sollen, in einem Fall, in dem sich die Bildverarbeitungsvorrichtung (102) in einem nicht eingeschränkten Zustand befindet, in dem die Funktionalität nicht eingeschränkt ist (S601:NEIN); **dadurch gekennzeichnet, dass** das Verfahren die folgenden Schritte umfasst:
Bestimmen (S702), in einem Fall, in dem sich die Bildverarbeitungsvorrichtung (102) im eingeschränkten Zustand befindet (S701:JA), ob die Speichereinheit (203, 210) nicht ausgegebene Bilddaten speichert, für die die Ausgabeverarbeitung durch die Bildverarbeitungsvorrichtung nicht abgeschlossen ist; und
Ausführen (S1001) einer Übertragungsverarbeitung, um die nicht ausgegebenen Bilddaten, die in der Speichereinheit (203, 210) gespeichert sind, an eine Zieleinrichtung zu übertragen, in einem Fall, in dem sich die Bildverarbeitungsvorrichtung (102) im eingeschränkten Zustand befindet (S701:JA) und das Bestimmen bestimmt hat (S702:JA), dass die Speichereinheit (203, 210) nicht ausgegebene Bilddaten speichert.

14. Programm mit Anweisungen, die bei Ausführung durch einen Computer einer Bildverarbeitungsvorrichtung nach einem der Ansprüche 1 bis 12 diesen dazu veranlassen, das Verfahren nach Anspruch 13 auszuführen.

## Revendications

1. Appareil de traitement d'images (102) capable d'une communication avec un serveur de service d'abonnement (101) qui gère un contrat de service d'un service d'abonnement pour des fournitures consommables utilisées par l'appareil de traitement d'images (102) pour l'impression de données d'image, l'appareil de traitement d'images (102) comprenant :
une unité de transition (201) configurée pour amener l'appareil de traitement d'images (102) à effectuer une transition vers un état limité où la fonctionnalité est limitée, dans un cas où il ne peut pas être confirmé que l'appareil de traitement d'images (102) s'abonne au service d'abonnement par la communication (S501, S502, S504) ;
une unité de stockage (203, 210) configurée pour stocker (S602) des données d'image devant être délivrées en sortie par l'appareil de traitement d'images dans un cas où l'appareil de traitement d'images (102) est dans un état non limité dans lequel la fonctionnalité n'est pas limitée (S601 : NON) dans l'unité de stockage, **caractérisé en ce que** l'appareil de traitement d'images comprend :
une unité de détermination (201) configurée pour déterminer (S702), dans un cas où l'appareil de traitement d'images (102) est dans l'état limité (S701 : OUI), si l'unité de stockage (203, 210) stocke des données d'image non délivrées en sortie pour lesquelles un traitement de sortie par l'appareil de traitement d'images n'est pas achevé ; et
une unité de commande (201) configurée pour amener l'appareil de traitement d'images (102) à émettre (S1001) les données d'image non délivrées en sortie stockées dans l'unité de stockage (203, 210) vers un dispositif de destination dans un cas où l'appareil de traitement d'images (102) est dans l'état limité (S701 : OUI) et l'unité de détermination (201) a déterminé (S702 : OUI) que l'unité de stockage (203, 210) stocke des données d'image non délivrées en sortie.

2. Appareil de traitement d'images selon la revendication 1, dans lequel
lors d'une reprise après une erreur, l'unité de commande (201) amène l'appareil de traitement d'images (102) à exécuter le traitement de sortie à l'aide des données d'image stockées dans l'unité de stockage (203, 210) dans le cas où l'appareil de traitement d'images (102) est dans l'état limité (S701 : OUI) et l'unité de détermination (201) a déterminé (S702 : OUI) que l'unité de stockage (203, 210) stocke des données d'image non délivrées en sortie.

3. Appareil de traitement d'images selon la revendication 1, dans lequel
lors d'une opération à distance à partir d'un appareil de communication différent (1201), l'unité de commande (201) amène l'appareil de traitement d'images (102) à exécuter le traitement de sortie à l'aide des données d'image stockées dans l'unité de stockage (203, 210) dans le cas où l'appareil de traitement d'images (102) est dans l'état limité (S701 : OUI) et l'unité de détermination (201) a déterminé (S702 : OUI) que l'unité de stockage (203, 210) stocke des données d'image non délivrées en sortie.

4. Appareil de traitement d'images selon la revendication 1, comprenant en outre une interface d'entrée (205), dans lequel
lors d'une opération d'utilisateur réalisée sur l'interface d'entrée (205), l'unité de commande (201) amène l'appareil de traitement d'images (102) à exécuter le traitement de sortie à l'aide des données d'image stockées dans l'unité de stockage (203, 210) dans le cas où l'appareil de traitement d'images (102) est dans l'état limité (S701 : OUI) et l'unité de détermination (201) a déterminé (S702 : OUI) que l'unité de stockage (203, 210) stocke des données d'image non délivrées en sortie.

5. Appareil de traitement d'images selon l'une quelconque des revendications 1 à 4, dans lequel
le cas où il ne peut pas être confirmé que l'appareil de traitement d'images (102) s'abonne au service d'abonnement comporte un cas où des informations sur le contrat de service ne sont pas reçues.

6. Appareil de traitement d'images selon l'une quelconque des revendications 1 à 5, dans lequel
les données d'image devant être délivrées en sortie sont des données d'image reçues par une réception de télécopie par l'appareil de traitement d'images (102), des données d'image numérisées par l'appareil de traitement d'images (102), des données d'image obtenues auprès d'une unité mémoire externe connectée à l'appareil de traitement d'images (102) ou des données d'image obtenues auprès d'un stockage en nuage par le biais d'une unité de communication (230, 204) de l'appareil de traitement d'images (102).

7. Appareil de traitement d'images selon l'une quelconque des revendications 1 à 6, dans lequel
le traitement de sortie à l'aide des données d'image stockées consiste à imprimer les données d'image.

8. Appareil de traitement d'images selon l'une quelconque des revendications 1 à 6, dans lequel
le traitement d'émission à l'aide des données d'image stockées consiste à émettre (S1001) les données d'image vers un appareil de traitement d'images différent ou un dispositif de stockage externe.

9. Appareil de traitement d'images selon l'une quelconque des revendications 1 à 8, dans lequel
dans le cas où l'appareil de traitement d'images (102) est dans l'état limité et l'unité de détermination (201) a déterminé (S1301 : OUI) que l'unité de stockage stocke des données d'image non délivrées en sortie, l'unité de commande (201) réalise une notification prédéterminée (S1302).

10. Appareil de traitement d'images selon la revendication 9, comprenant en outre une unité de commande d'affichage (206, 207) configurée pour afficher un écran de menu pour l'exécution d'une fonction, dans lequel
l'unité de commande d'affichage (206, 207) affiche une notification d'erreur dans un cas où un élément prédéterminé est sélectionné sur l'écran de menu et l'appareil de traitement d'images (102) est dans l'état limité, et
dans le cas où l'appareil de traitement d'images (102) est dans l'état limité et l'unité de détermination (201) a déterminé que l'unité de stockage (203, 210) stocke des données d'image non délivrées en sortie, l'unité de commande d'affichage (206, 207) affiche la notification prédéterminée pour un élément relatif aux données d'image.

11. Appareil de traitement d'images selon la revendication 10, dans lequel
l'unité de commande (201) est configurée pour ne pas limiter le traitement de sortie pour l'élément pour lequel la notification prédéterminée est affichée.

12. Appareil de traitement d'images selon la revendication 10 ou 11, dans lequel
dans le cas où l'appareil de traitement d'images (102) est dans l'état limité et l'unité de détermination a déterminé que l'unité de stockage (203, 210) stocke des données d'image non délivrées en sortie, l'unité de commande d'affichage (206, 207) affiche un écran indiquant que les données d'image sont stockées dans l'unité de stockage (203, 210) pendant une durée prédéterminée à intervalles de temps réguliers ou irréguliers.

13. Procédé de commande d'un appareil de traitement d'images (102) capable d'une communication avec un serveur de service d'abonnement (101) qui gère un contrat de service d'un service d'abonnement pour des fournitures consommables utilisées par l'appareil de traitement d'images (102) pour l'impression de données d'image, le procédé comprenant :
une étape de transition consistant à amener l'appareil de traitement d'images (102) à effectuer une transition vers un état limité où la fonctionnalité est limitée, dans un cas où il ne peut pas être confirmé que l'appareil de traitement d'images s'abonne au service d'abonnement par la communication (S501, S502, S504) ;
le stockage (S602), dans une unité de stockage (203, 210) de l'appareil de traitement d'images (102), de données d'image devant être délivrées en sortie par l'appareil de traitement d'images dans un cas où l'appareil de traitement d'images (102) est dans un état non limité dans lequel la fonctionnalité n'est pas limitée (S601 : NON) ;
**caractérisé en ce que** le procédé comprend les étapes de : la détermination (S702), dans un cas où l'appareil de traitement d'images (102) est dans l'état limité (S701 : OUI), de si l'unité de stockage (203, 210) stocke des données d'image non délivrées en sortie pour lesquelles un traitement de sortie par l'appareil de traitement d'images n'est pas achevé ; et
l'exécution (S1001) d'un traitement d'émission pour émettre les données d'image non délivrées en sortie stockées dans l'unité de stockage (203, 210) vers un dispositif de destination dans un cas où l'appareil de traitement d'images (102) est dans l'état limité (S701 : OUI) et la détermination a déterminé (S702 : OUI) que l'unité de stockage (203, 210) stocke des données d'image non délivrées en sortie.

14. Programme doté d'instructions qui, lorsqu'elles sont exécutées par un ordinateur d'un appareil de traitement d'images selon l'une quelconque des revendications 1 à 12, amène l'ordinateur à exécuter le procédé selon la revendication 13.
